# EUROPÄISCHE PATENTSCHRIFT

(11) **EP 3 459 851 B1**
(45) Veröffentlichungstag und Bekanntmachung des Hinweises auf die Patenterteilung: **24.08.2022**
(21) Anmeldenummer: 18195772.1
(22) Anmeldetag: 20.09.2018
(51) Int. Cl.: B64D 11/00, B62B 5/00

(54) **ELEKTRISCH ANGETRIEBENE TRANSPORTWAGENKOMBINATION FÜR EINE FLUGZEUGKABINE**
ELECTRICALLY DRIVEN TRANSPORT TROLLEY COMBINATION FOR AN AIRCRAFT CABIN
COMBINAISON DE CHARIOT TRANSPORTEUR À ENTRAÎNEMENT ÉLECTRIQUE POUR UNE CABINE D'AVION

(30) Priorität: 20.09.2017 DE 102017121846
(43) Veröffentlichungstag der Anmeldung: 27.03.2019
(73) Patentinhaber: Airbus Operations GmbH, 21129 Hamburg (DE)
(72) Erfinder: BAUER, Michael, 21129 Hamburg (DE); KAUFELD, Norbert, 21129 Hamburg (DE); REISS, Matthias, 21129 Hamburg (DE); KIEHNE, Oliver, 21129 Hamburg (DE); STOCK, Simon, 28359 Bremen (DE); ERNITS, Rafael Mortensen, 28359 Bremen (DE)
(74) Vertreter: Bird & Bird LLP

(56) Entgegenhaltungen:
- WO-A2-2013/136283
- FR-A1- 2 746 060
- US-A- 4 077 535
- US-A1- 2006 024 150
- US-A1- 2009 294 394

## Beschreibung

Die vorliegende Anmeldung betrifft eine elektrisch angetriebene Transportwagenkombination für eine Flugzeugkabine.

In Passagierflugzeugen werden im Rahmen des Bordservice während eines Flugs üblicherweise von Hand fahrbare Transportwagen eingesetzt, die auch als Trolleys bezeichnet werden. Sie dienen insbesondere der Versorgung der Passagiere mit Speisen und Getränken, dem Einsammeln von Müll und leeren Tabletts oder auch dem Verkauf von Waren. Die Transportwagen werden in zugeordneten Fächern in der Bordküche gelagert und im Einsatz vom Bordpersonal durch die Flugzeugkabine zu den einzelnen Passagieren geschoben oder gezogen. Dabei müssen die Räder der Transportwagen aus Sicherheitsgründen bei jedem Stopp blockiert und bei jeder Weiterfahrt wieder freigeben werden, um eine unerwünschte selbständige Bewegung etwa infolge von Flugbewegungen zu verhindern. Vor und nach den Flügen müssen sie ferner vom Bodenpersonal in das Flugzeug geladen und in der Bordküche verstaut bzw. aus dem Bordküche entnommen und aus dem Flugzeug ausgeladen werden.

Fahrbare Transportwagen sind in vielen unterschiedlichen Abmessungen bekannt, da sie nicht standardisiert sind und verschiedene Fluglinien verschiedene Transportwagen einsetzen. Sie haben aber typischerweise ein Gewicht von mehr als 100 kg für große Transportwagen und mehr als 60 kg für kleinere Transportwagen. Das Schieben oder Ziehen der Transportwagen von Hand durch das Kabinenpersonal ist daher mit erheblichen körperlichen Belastungen verbunden, wobei erschwerend zu berücksichtigen ist, dass das Flugzeug Lagen einnehmen kann, in denen der Kabinenboden um bis zu etwa 3° gegenüber der Horizontalen geneigt ist, und dass der Transportwagen auch bei Auftreten von Turbulenzen gehandhabt werden muss. Außerdem muss regelmäßig eine manuell eine mechanische Bremseinrichtung betätigt und wieder gelöst werden, was für das Bordpersonal zeitaufwändig und anstrengend ist. Aus der Patentschrift US 4 077 535 A ist eine ferngesteuerte Transportwagenkombination bekannt. Die WO 2013/136283 zeigt einen autonomen Trolley mit "wheel-assist", ohne auf die Steuerung einzugehen.

Es ist daher eine Aufgabe der vorliegenden Erfindung, eine fahrbare Transportwagenkombination bereitzustellen, die durch das Bordpersonal mit geringeren körperlichen Belastungen und mit geringerem Zeitaufwand zu bedienen ist und die einfach und kostengünstig aufgebaut und einzusetzen ist.

Diese Aufgabe wird durch eine elektrisch angetriebene Transportwagenkombination mit den Merkmalen des Anspruchs 1 und die Verwendung einer elektrischen Betätigungsvorrichtung mit den Merkmalen des Anspruchs 12 erfüllt. Vorteilhafte Ausführungsformen der Transportwagenkombination sind Gegenstand der jeweiligen abhängigen Ansprüche.

Nach der vorliegenden Erfindung ist eine elektrisch angetriebene Transportwagenkombination für eine Flugzeugkabine vorgesehen, die in ihrer Gesamtheit wie ein herkömmlicher, aber mit einem elektrischen Antrieb versehener Transportwagen bzw. Trolley zur Benutzung in einer Flugzeugkabine, insbesondere im Rahmen des Bordservice, verwendet werden kann, d.h. zum Beispiel als Transportwagen zur Versorgung der Passagiere mit Speisen und Getränken, zum Einsammeln von Müll und leeren Tabletts oder auch zum Verkauf von Waren durch das Bordpersonal. Die Transportwagenkombination, die daher auch als elektrisch angetriebener Transportwagen für eine Flugzeugkabine bezeichnet werden kann, weist zum einen einen unabhängig verwendbaren manuell zu bewegenden Transportwagen für eine Flugzeugkabine, der insbesondere ein herkömmlicher Transportwagen ist, wie er oben beschrieben worden ist, und zum anderen eine elektrische Betätigungsvorrichtung auf, die lösbar mit dem Transportwagen koppelbar ist. Wie noch deutlich werden wird, dient die elektrische Betätigungsvorrichtung nach der Kopplung mit dem Transportwagen dazu, die Kombination von Transportwagen und Betätigungsvorrichtung elektrisch angetrieben zu bewegen. Dabei stellt die Betätigungsvorrichtung die Funktion des elektrischen Antriebs bereit, während der manuell zu bewegende Transport-wagen weiterhin seine dem Bordservice dienenden Funktionen bereitstellt.

Der unabhängig verwendbare manuell zu bewegende Transportwagen, auf den nachfolgend einfach als Transportwagen Bezug genommen wird, weist einen Bodenabschnitt mit einer Unterseite und einen Hauptabschnitt oder Hauptkörper auf, der sich gegenüber von der Unterseite von dem Bodenabschnitt erstreckt. Der Hauptabschnitt, der ganz oder teilweise einstückig mit dem Bodenabschnitt ausgebildet sein kann, weist üblicherweise z.B. Fächer für Speisen und Getränke oder für Waren oder einen Aufnahmeraum für Müll auf. Der Bodenabschnitt kann zum Beispiel in Form einer Bodenplatte oder eines Bodenrahmens vorgesehen sein. Außerdem weist der Transportwagen eine Vielzahl von Rädern auf, die vollständig oder teilweise von der Unterseite vorstehen und bevorzugt an dem Bodenabschnitt befestigt sind. Die Räder sind so angeordnet, dass der Transportwagen mit den Rädern auf einem Kabinenboden abgestützt und manuell durch Schieben oder Ziehen über den Kabinenboden bewegt werden kann, wobei dann die Räder über den Kabinenboden rollen, während der Bodenabschnitt von dem Kabinenboden beabstandet ist.

Die lösbar mit dem Transportwagen koppelbare elektrische Betätigungsvorrichtung weist einen Rahmen bzw. Tragabschnitt, der ein- oder mehrstückig ausgebildet sein kann, sowie eine an dem Rahmen montierte antreibbare Rolleinrichtung, eine an dem Rahmen montierte Ankopplungsvorrichtung, eine elektrische Antriebseinrichtung und eine Steuereinrichtung auf.

Die Rolleinrichtung ist so angepasst und angeordnet, dass die elektrische Betätigungsvorrichtung mittels der Rolleinrichtung auf einem Kabinenboden abstützbar und rollend über den Kabinenboden bewegbar ist.

Die Ankopplungsvorrichtung ist zur lösbaren Kopplung der elektrischen Betätigungsvorrichtung mit dem Transportwagen angepasst und weist einen Angriffsabschnitt und einen Bewegungsabschnitt auf. Der Angriffsabschnitt ist mittels des Bewegungsabschnitts wahlweise zwischen einer ersten Position und einer zweiten Position bewegbar. In der zweiten Position ist der Angriffsabschnitt weiter von dem Rahmen entfernt ist als in der ersten Position, und zwar - wie deutlich werden wird - nach Abstützung der Betätigungsvorrichtung mittels der Rolleinrichtung auf einem Kabinenboden bevorzugt in einer Richtung senkrecht zum Kabinenboden. Der Angriffsabschnitt kann auch zwei oder mehr separate Teil-Angriffsabschnitte aufweisen, die durch den Bewegungsabschnitt jeweils zwischen der ersten und zweiten Position bewegbar sind.

Die elektrische Antriebseinrichtung ist angepasst, um die Rolleinrichtung anzutreiben, d.h. in der Weise, dass die mit der Rolleinrichtung auf einem Kabinenboden abgestützte elektrische Betätigungsvorrichtung über den Kabinenboden bewegt wird. Die Steuereinrichtung ist dabei angepasst, um die elektrische Antriebseinrichtung bzw. deren Betrieb zum Antreiben der Rolleinrichtung zu steuern. Auf diese Weise wird auch die Bewegung der Betätigungsvorrichtung über den Kabinenboden gesteuert.

Dabei ist es insbesondere bevorzugt, wenn die Ankopplungsvorrichtung so angeordnet und ausgestaltet ist, dass nach Abstützung des Transportwagens mit den Rädern auf einem Kabinenboden die elektrische Betätigungsvorrichtung mit dem Angriffsabschnitt in der ersten Position so unter dem Bodenabschnitt des Transportwagens angeordnet werden kann, dass sie mit der Rolleinrichtung auf dem Kabinenboden abgestützt ist und der Angriffsabschnitt der Unterseite des Bodenabschnitts des Transportwagens zugewandt ist, und der Angriffsabschnitt anschließend durch Bewegung in die zweite Position mit dem Bodenabschnitt in Eingriff gebracht wird, wobei die Ankopplungsvorrichtung in der zweiten Position des Angriffsabschnitts eine von dem Kabinenboden weg gerichtete Kraft auf den Bodenabschnitt ausübt, die die Vielzahl von Rädern des Transportwagens zumindest teilweise von dessen Gewicht entlastet, bevorzugt um mindestens 50% des Gewichts. Aufgrund der Gewichtsentlastung kann der Betätigungsabschnitt, der nun mit seiner Rolleinrichtung zumindest einen Teil des Gewichts der Transportwagenkombination trägt, die Transportwagenkombination effizient bewegen, und der Transportwagen kann sicher auf dem Angriffsabschnitt aufliegen. Dabei - und auch unabhängig von dieser bevorzugten Ausführungsform - ist es besonders bevorzugt, wenn die Abmessungen der Betätigungseinrichtung so gewählt sind, dass sie im gekoppelten Zustand nicht seitlich über den Bodenabschnitt des Transportwagens vorsteht, d.h. wenn sie sich innerhalb des durch die Projektion des Bodenabschnitts auf den Kabinenboden definierten Bereichs befindet. Dadurch weist die Transportwagenkombination in vorteilhafter Weise dieselben (äußeren) Abmessungen auf wie der Transportwagen, so dass die Transportwagenkombination beispielsweise in einem bestehenden Stauraum einer Bordküche untergebracht werden kann.

In dieser bevorzugten Ausgestaltung ist mit anderen Worten die Ankopplungsvorrichtung mit ihrem Angriffsabschnitt in der ersten Position so angeordnet, dass die Betätigungsvorrichtung mit ihrer Rolleinrichtung in Bodenkontakt unter den Transportwagen geschoben werden kann. Der Angriffsabschnitt befindet sich dann zwischen dem Kabinenboden und der Unterseite des Bodenabschnitts und ist von diesem beabstandet. Mittels des Bewegungsabschnitts kann der Angriffsabschnitt dann nach oben in Richtung auf den Bodenabschnitt verfahren werden, bis er an diesem angreift und die beschriebene Kraft ausübt. Der Ankopplungsabschnitt kann daher auch als Hebevorrichtung bezeichnet werden. Es ist aber bevorzugt, wenn die Vielzahl von Rädern des Transportwagens nur teilweise von dessen Gewicht entlastet werden, d.h. der Transportwagen nicht vollständig vom Kabinenboden abgehoben wird und die Räder des Transportwagens noch Bodenkontakt haben. Dadurch wird eine höhere Stabilität der Transportwagenkombination erreicht.

In jedem Fall wird die Betätigungsvorrichtung auf diese Weise bzw. mit Hilfe der Ankopplungsvorrichtung mit dem Transportwagen gekoppelt, so dass durch Antreiben der Rolleinrichtung mittels der elektrischen Antriebseinrichtung die Kombination von Transportwagen und Betätigungsvorrichtung elektrisch über den Kabinenboden bewegt werden kann. Durch Bewegung des Angriffsabschnitts aus der zweiten Position in die erste Position wird die Betätigungsvorrichtung wieder von dem Transportwagen entkoppelt, so dass die Betätigungsvorrichtung von dem Transportwagen entfernt und der Transportwagen eigenständig wie ein herkömmlicher manuell zu bewegender Transportwagen verwendet werden kann. Aufgrund des Gewichts des Transportwagens, das zumindest teilweise von dem Angriffsabschnitt getragen wird, ist es nicht erforderlich, eine Verriegelungseinrichtung zwischen Angriffsabschnitt und Bodenabschnitt vorzusehen, so dass die Kopplung einfach und schnell möglich ist. Ggf. könnte der Angriffsabschnitt mit einer Oberfläche mit hohem Reibungskoeffizienten versehen sein, um ein Rutschen des Bodenabschnitts auf dem Angriffsabschnitt zu verhindern. Es ist aber natürlich möglich, eine separate Verriegelungseinrichtung vorzusehen. Eine solche Verriegelungseinrichtung kann beispielsweise zwei Platten oder andere Verriegelungselemente aufweisen, die als Teil des Angriffsabschnitts an gegenüberliegenden Seiten von diesem vorgesehen sind und zwischen einer Verriegelungsstellung, in der sie seitlich an dem Hauptabschnitt des Transportwagens anliegen und ihn zwischen sich festklemmen, und einer Freigabestellung umgeklappt oder bewegt werden können, in der sie von dem Hauptabschnitt des Transportwagens beabstandet sind. Das Umklappen bzw. die Bewegung der Verriegelungselemente kann elektrisch, hydraulisch, mechanisch oder manuell erfolgen. Insbesondere in letzterem Fall kann es dabei auch vorteilhaft sein, einen oder mehrere manuell bewegbare Feststellhebel vorzusehen, mit denen die Verriegelungselemente wahlweise in der Verriegelungsstellung und ggf. auch in der Freigabestellung festgehalten werden können.

Die beschriebene Transportwagenkombination hat den Vorteil, dass der Kraft- und Zeitaufwand für das Bordpersonal reduziert und die Bedienung vereinfacht werden kann, was die Ergonomie verbessert. Dabei können die bestehenden, manuell zu bewegenden Transportwagen ohne Modifikation weiter verwendet werden, wobei die Betätigungsvorrichtung mit verschieden dimensionierten Transportwagen benutzt bzw. an diese angepasst werden kann. Die Handhabung der Transportwagen durch das Bodenpersonal beim Einladen in das Flugzeug und beim Ausladen aus dem Flugzeug bedarf genauso wenig einer Änderung, wie die Verstaueinrichtung für den Transportwagen bzw. die Transportwagenkombination in der Bordküche.

Bei der Handhabung kann vorgesehen sein, dass beim Aus- und Einladen von Transportwagen die Betätigungsvorrichtung im Flugzeug verbleibt und dort beispielsweise in der Zwischenzeit eine in ihr vorgesehene Batterie aufgeladen wird. Auf diese Weise wird das Bodenpersonal nicht durch das zusätzliche Gewicht der Betätigungsvorrichtung belastet, und die Transportwagen können ganz genauso wie üblich gehandhabt werden. Außerdem muss dann nicht mehr für jeden Transportwagen eine Betätigungsvorrichtung vorhanden sein. Die Betätigungsvorrichtung wird nach Bedarf an Bord mit einem Transportwagen gekoppelt und wieder von diesem gelöst.

In einer bevorzugten Ausführungsform weist die Transportwagenkombination ferner eine elektrische Energieversorgungseinrichtung zur Versorgung der elektrischen Antriebseinrichtung mit elektrischer Energie auf. Die elektrische Energieversorgungseinrichtung kann z.B. eine wieder aufladbare oder nicht wieder aufladbare Batterie sein. Im Fall einer wieder aufladbaren Batterie kann zum Zweck des Aufladens dieser Batterie beispielsweise eine Ladevorrichtung vorgesehen sein, in die die Betätigungsvorrichtung zur Lagerung bei Nichtgebrauch eingeschoben werden kann und in der die Batterie nach dem Einschieben aufgeladen wird. Ein solche Ladevorrichtung kann insbesondere so ausgestaltet sein, dass sie in einem Bodenbereich eines Aufnahmefachs für einen herkömmlichen Transportwagen der oben beschriebenen Art angeordnet werden kann und dass sie dann einen Einschubabschnitt für die Betätigungsvorrichtung und einen oberen Tragabschnitt bereitstellt, auf dem ein herkömmlicher Transportwagen abgestützt werden kann. Es ist dann in vorteilhafter Weise möglich, sowohl die Betätigungsvorrichtung als auch einen herkömmlichen Transportwagen in nicht gekoppeltem Zustand gleichzeitig in dem Aufnahmefach unterzubringen und dabei ein Laden der Batterie zu ermöglichen. Der Einschubabschnitt befindet sich bevorzugt auf Höhe des Bodens des Flugzeugs bzw. des Aufnahmefachs, so dass die Betätigungsvorrichtung einfach eingeschoben werden kann, ohne sie anheben zu müssen. Es ist aber auch möglich, dass nur eine Energieversorgungsschnittstelle zum Anschluss an eine externe elektrische Energieversorgungseinrichtung vorgesehen ist. Zum Beispiel kann in vorteilhafter Weise eine Energieversorgungsschnittstelle vorgesehen sein, die induktiv elektrische Energie von einer im Boden einer Flugzeugkabine angeordneten Energieversorgungseinrichtung empfängt.

Erfindungsgemäss ist die elektrische Antriebseinrichtung ferner angepasst, um die Rolleinrichtung wahlweise zu bremsen, d.h. eine Bremskraft bzw. eine Bremswirkung auf ein oder mehrere Rollelemente - wie zum Beispiel Räder, Rollen oder Kugeln - auszuüben oder diese zu blockieren. Dazu kann die elektrische Antriebseinrichtung so ausgestaltet sein, dass sie die Bremswirkung bereitstellt, wenn sie oder ein Teil von ihr ausgeschaltet ist, wie zum Beispiel ein oder mehrere geeignete Elektromotoren zum Antreiben der Rolleinrichtung, z.B. Schrittmotoren. Alternativ kann die elektrische Antriebseinrichtung so ausgestaltet sein, dass sie die Bremswirkung bereitstellt, wenn die elektrische Antriebseinrichtung oder ein Teil von ihr in bestimmter Weise angesteuert und mit Strom beaufschlagt wird, wie zum Beispiel ein oder mehrere Elektromotoren zum Antreiben der Rolleinrichtung, z.B. bürstenlose Motoren. In jedem Fall kann vorgesehen sein, dass das Bremsen und das Aufheben der Bremswirkung durch einen Befehl des Benutzers an die Steuereinrichtung erfolgt, zum Beispiel mittels einer Bediengungseinrichtung, wie sie weiter unten beschrieben wird. Es ist natürlich auch möglich, dass die elektrische Betätigungsvorrichtung zusätzlich ein oder mehrere mechanische bzw. manuelle oder hydraulische Bremsen oder Feststellbremsen aufweist.

Gemäss der Erfindung ist die Steuereinrichtung ferner angepasst, um die elektrische Antriebsvorrichtung so zu steuern, dass diese automatisch eine Bewegung der Transportwagenkombination beim Schieben unterstützt und ohne Schieben die Rolleinrichtung bremst. Gleiches gilt dann bevorzugt beim Ziehen. Mit anderen Worten wird eine Kraftunterstützung bzw. eine automatische Start/Stop-Funktion mit automatischer Abbremsung bereitgestellt, ähnlich wie sie bei eBikes vorgesehen ist.

Zudem ist die elektrische Antriebseinrichtung angepasst, um auch den Bewegungsabschnitt elektrisch anzutreiben. Dazu kann die elektrische Antriebseinrichtung mindestens einen ersten Elektromotor, wie zum Beispiel einen oder mehrere erste Servomotoren, zum Antreiben der Rolleinrichtung und mindestens einen zweiten Elektromotor, wie zum Beispiel einen oder mehrere zweite Servomotoren, zum Antreiben des Bewegungsabschnitts aufweisen. Die Bewegungen können alternativ auch durch einen oder mehrere gemeinsame Elektromotoren erfolgen. Die Steuereinrichtung ist dann auch angepasst, um den Betrieb der elektrischen Antriebseinrichtung zum Antreiben des Bewegungsabschnitts zu steuern und damit die Bewegung des Angriffsabschnitts zwischen der ersten und der zweiten Position. Es ist prinzipiell aber auch möglich, dass der Bewegungsabschnitt manuell, mechanisch oder hydraulisch betätigbar ist, um den Angriffsabschnitt zwischen der ersten und zweiten Position zu bewegen.

In einer bevorzugten Ausführungsform weist der Bewegungsabschnitt der Ankopplungsvorrichtung einen oder mehrere Scherenhebemechanismen auf. Dann kann die Ankopplungsvorrichtung insgesamt als Scherenhebeplattform(en) bzw. Scherenhebebühne(n) bezeichnet werden oder solche bzw. eine solche aufweisen, wobei aber der der Plattform bzw. Bühne entsprechende Angriffsabschnitt verschiedene Formen annehmen kann und nicht als (durchgehende) Plattform oder Bühne vorgesehen sein muss. Die Ausgestaltung des Bewegungsabschnitts mit einem oder mehreren Scherenhebemechanismen oder als ein oder mehrere Scherenhebemechanismen ist besonders einfach und robust.

In einer alternativen bevorzugten Ausführungsform weist der Bewegungsabschnitt der Ankopplungsvorrichtung ein oder mehrere Spindelhubelemente auf, die jeweils eine in axialer Richtung verschiebbare Spindel aufweisen. Dann kann die Ankopplungsvorrichtung insgesamt als Spindelhubplattform(en) bezeichnet werden oder solche bzw. eine solche aufweisen, wobei aber der der Plattform bzw. Bühne entsprechende Angriffsabschnitt verschiedene Formen annehmen kann und nicht als (durchgehende) Plattform oder Bühne vorgesehen sein muss. Die Ausgestaltung des Bewegungsabschnitts mit einem oder mehreren Spindelhubelementen ist ebenfalls besonders einfach und robust. In dieser Ausführungsform ist die elektrische Antriebseinrichtung bevorzugt angepasst, um auch die Spindelhubelemente elektrisch anzutreiben, beispielsweise mit Hilfe der oben erwähnten Motoren oder anderer Motoren.

Ein weiteren alternativen bevorzugten Ausführungsformen weist der Bewegungsabschnitt der Ankopplungsvorrichtung einen oder mehrere Hydraulikzylinder, einen oder mehrere teleskopische Zylinder, einen oder mehrere Spiralhubzylinder oder ein oder mehrere drehbar gelagerte und antreibbare Nocken- bzw. Kurvenscheiben auf, die jeweils an dem Angriffsabschnitt angreifen, um ihn wahlweise nach oben und nach unten zu bewegen.

In einer bevorzugten Ausführungsform, die mit der Ausführungsform kombiniert werden kann, in der der Bewegungsabschnitt einen oder mehrere Scherenhebemechanismen, ein oder mehrere Spindelhubelemente, einen oder mehrere Hydraulikzylinder, einen oder mehrere teleskopische Zylinder, einen oder mehrere Spiralhubzylinder oder ein oder mehrere drehbar gelagerte und antreibbare Nocken- bzw. Kurvenscheiben aufweist, weist der Angriffsabschnitt zwei voneinander beabstandete L-Profile auf. Diese stellen zwei von den oben erwähnten Teil-Angriffsabschnitten dar. Die L-Profile sind angepasst sind, um in der zweiten Position des Angriffsabschnitts an zwei gegenüberliegenden Kanten des Bodenabschnitts anzugreifen. Dabei ist es möglich, vorzusehen, dass der Abstand zwischen den L-Profilen einstellbar ist, um eine Anpassung an verschieden breite Transportwagen zu ermöglichen oder um den Transportwagen im angekoppelten Zustand zwischen sich festzuklemmen, um eine (zusätzliche) Verriegelungswirkung zu erhalten. Eine solche Einstellung oder Verriegelung kann manuell oder aber auch elektrisch mit Hilfe der elektrischen Antriebseinrichtung vorgesehen sein, die dazu z.B. einen weiteren separaten Elektromotor und z.B. ein oder mehrere Spindelelemente aufweisen kann, entlang derer sich mindestens eines der L-Profile bewegt, wenn die Spindelelemente drehend angetrieben werden. Unabhängig davon kann für jedes L-Profil beispielsweise ein eigener Scherenhebemechanismus, ein oder mehrere eigene Spindelhubelemente, ein oder mehrere eigene Hydraulikzylinder, ein oder mehrere eigene teleskopische Zylinder, ein oder mehrere eigene Spiralhubzylinder oder eine oder mehrere eigene drehbar gelagerte und antreibbare Nocken- bzw. Kurvenscheiben vorgesehen sein, oder die beiden L-Profile können beispielsweise durch einen gemeinsamen Scherenhebemechanismus, ein oder mehrere gemeinsame Spindelhubelemente, ein oder mehrere gemeinsame Hydraulikzylinder, ein oder mehrere gemeinsame teleskopische Zylinder, ein oder mehrere gemeinsame Spiralhubzylinder oder eine oder mehrere gemeinsame drehbar gelagerte und antreibbare Nocken- bzw. Kurvenscheiben bewegt werden. Ein Arm der L-Profile kann auch umklappbar ausgestaltet sein, um jeweils ein Verriegelungselement bereitzustellen, wie es oben als Teil einer Verriegelungseinrichtung beschrieben worden ist.

In einer bevorzugten Ausführungsform weist die Rolleinrichtung mehrere Räder auf, von denen mindestens ein Rad durch die elektrische Antriebseinrichtung antreibbar ist. Die elektrische Antriebseinrichtung kann zu diesem Zweck z.B. für jedes antreibbare Rad einen Nabenmotor aufweisen. Wenn die Rolleinrichtung mehrere Räder aufweist, ist es besonders bevorzugt, wenn sie bzw. die Rolleinrichtung als Teil eines omnidirektionalen Antriebs ausgebildet sind bzw. ist, so dass die Bewegungsrichtung der Betätigungseinrichtung durch geeignetes Ansteuern bzw. Antreiben der einzelnen Räder mit Hilfe der elektrischen Antriebseinrichtung gesteuert werden kann, ohne einen separaten Lenkmechanismus vorsehen zu müssen. Dadurch kann die Betätigungsvorrichtung einfacher, leichter und mit geringeren Dimensionen ausgebildet werden. In Fall eines omnidirektionalen Antriebs und auch unabhängig davon können die Räder in vorteilhafter Weise Allseitenräder bzw. omnidirektionale Räder, die auch als Omniwheels bekannt sind, oder Mecanum-Räder sein.

In einer bevorzugten Ausführungsform, die alternativ oder zusätzlich zu der vorhergehenden Ausführungsform vorgesehen sein kann, weist die Rolleinrichtung eine Vielzahl von Kugeln oder Rollen auf, von denen mindestens eine durch die elektrische Antriebseinrichtung antreibbar ist. Die Rolleinrichtung kann z.B. in Form einer oder mehrerer Kugel- oder Rollenmatten ausgebildet sein.

In einer bevorzugten Ausführungsform weist die Steuereinrichtung eine Bedienungseinrichtung auf oder ist kabelgebunden oder kabellos mit einer Bedienungseinrichtung verbunden. Die Bedienungseinrichtung kann insbesondere eine Fernbedienung sein. In jedem Fall ermöglicht es die Bedienungseinrichtung einem Benutzer, die Steuerungsfunktion der Steuereinrichtung und damit den Betrieb der elektrischen Antriebseinrichtung und der gesamten Betätigungsvorrichtung zu beeinflussen. Die Bedienungseinrichtung kann als tragbare Handbedienungseinrichtung ausgebildet sein oder aber dazu angepasst sein, um an dem Transportwagen befestigt zu werden. Es kann vorgesehen sein, dass die Betätigungsvorrichtung und ihre Bewegung - und damit auch die Bewegung der gesamten Transportwagenkombination - mit Hilfe der Bedienungseinrichtung gesteuert werden kann, wobei die Bedienungseinrichtung dann bevorzugt eine Fernbedienung ist. Mit anderen Worten kann vorgesehen sein, dass die Transportwagenkombination ohne jeglichen Kraftaufwand für das Bordpersonal alleine mit Hilfe der Bedienungseinrichtung bewegt wird. Es ist dabei auch vorteilhaft, wenn die Bedienungseinrichtung angepasst ist, um die Betätigungsvorrichtung - und damit auch die gesamte Transportwagenkombination - zu lenken, wobei es dann besonders bevorzugt ist, wenn die Rolleinrichtung als Teil eines omnidirektionalen Antriebs ausgebildet ist, wie es oben beschrieben worden ist. Die Bedienungseinrichtung kann beispielsweise einen Joystick aufweisen. Alternativ oder zusätzlich ist es möglich, dass die Bedienungseinrichtung eine am Körper des Bedieners tragbare Vorrichtung bzw. ein Wearable und/oder eine Smartwatch aufweist, die angepasst ist bzw. sind, um Translations- und/oder Rotationsbewegungen des Bedieners - und insbesondere einer Hand oder eines Arms des Bedieners - im Raum und/oder Muskelbewegungen oder -anspannungen zu erfassen und in Steuerungssignale für die Steuereinrichtung umzusetzen, um die Bewegung der Betätigungsvorrichtung zu steuern und sie bevorzugt auch zu lenken. Weiterhin ist es alternativ oder zusätzlich möglich, dass die Bedienungseinrichtung eine druckempfindliche Oberfläche an einem Handgriff des Transportwagens und/oder ein oder mehrere mit dem Handgriff gekoppelte Druckmesselemente oder Druckmesszellen aufweist, so dass von dem Bediener ausgeübte Druck- und Zugbewegungen in Steuerungssignale für die Steuereinrichtung umgesetzt werden, um die Bewegung der Betätigungsvorrichtung zu steuern und sie bevorzugt auch zu lenken. Dadurch kann die Steuerung der Bewegung der Transportwagenkombination weitestgehend unmerklich für den Bediener stattfinden, da die vom Bediener auf den Transportwagen ausgeübten Druck- und Zugbewegungen, bevorzugt einschließlich Lenkbewegungen, aufgenommen und durch die Betätigungsvorrichtung unterstützt werden.

In einer bevorzugten Ausführungsform weist die Betätigungseinrichtung eine mit der Steuereinrichtung verbundene und durch diese angesteuerte Statusanzeige zum Anzeigen von Betriebszuständen der Betätigungseinrichtung auf, wie z.B. ob die Betätigungseinrichtung mit dem Transportwagen gekoppelt ist oder nicht, ob die Rolleinrichtung gebremst wird, freilaufend ist oder angetrieben wird oder einen Ladezustand einer Batterie.

In einer bevorzugten Ausführungsform weist die elektrische Betätigungsvorrichtung ferner eine Sensoranordnung auf, die z.B. einen oder mehrere Lasersensoren aufweisen kann und die mit der Steuereinrichtung verbunden und angepasst ist, um Eigenschaften der Umgebung der Betätigungsvorrichtung zu erfassen und für die Eigenschaften repräsentative Sensorsignale zu liefern. Die die Steuereinrichtung ist ferner angepasst, um auf Basis der Sensorsignale der Sensoranordnung die Transportwagenkombination selbständig entlang eines Gangs einer Flugzeugkabine zu bewegen. Dazu können beispielsweise Führungseinrichtungen entlang des Gangs verlegt oder vorgesehen sein, die von der Sensoranordnung erfasst werden. In dieser Ausführungsform ist es zum Beispiel möglich, dass nur das Starten und Stoppen der Bewegung der Transportwagenkombination entlang des Gangs durch das Bordpersonal mit Hilfe einer Bedienungseinrichtung der oben erwähnten Form erfolgt, und dass nach dem Starten bis zum nächsten Stoppen die Transportwagenkombination selbsttägig entlang des Gangs fährt. Auf diese Weise ist es für das Bordpersonal besonders einfach möglich, die Transportwagenkombination von Passagier zu Passagier zu bewegen.

Die oben beschriebene elektrische Betätigungsvorrichtung als solche kann in vorteilhafter Weise mit einem unabhängig verwendbaren manuell zu bewegenden Transportwagen für eine Flugzeugkabine in einer Transportwagenkombination nach einer der oben beschriebenen Ausführungsformen verwendet werden, d.h. sie ist für diese Verwendung angepasst.

Nachfolgend wird die Erfindung unter Bezugnahme auf die Figuren näher erläutert, in denen ein Ausführungsbeispiel dargestellt ist.
- Figur 1: zeigt eine schematische Seitenansicht einer Transportwagenkombination gemäß einer Ausführungsform der vorliegenden Erfindung,
- Figur 2: zeigt eine schematische perspektivische Ansicht eines Teils der elektrischen Betätigungsvorrichtung der Transportwagenkombination der Figur 1,
- Figur 3: zeigt eine schematische perspektivische Ansicht eines kombinierten Batterie-, Sensor- und Steuerblocks der elektrischen Betätigungsvorrichtung der Figuren 1 und 2,
- Figur 4a: zeigt eine schematische Seitenansicht einer Ausführungsform der vorliegenden Erfindung mit einer alternativen Ausgestaltung der Bewegungseinrichtungen,
- Figur 4b: zeigt eine schematische Seitenansicht einer Ausführungsform der vorliegenden Erfindung mit einer weiteren alternativen Ausgestaltung der Bewegungseinrichtungen, und
- Figur 5a-c: zeigen schematische Seitenansichten einer Transportwagenkombination gemäß weiteren Ausführungsformen der vorliegenden Erfindung.

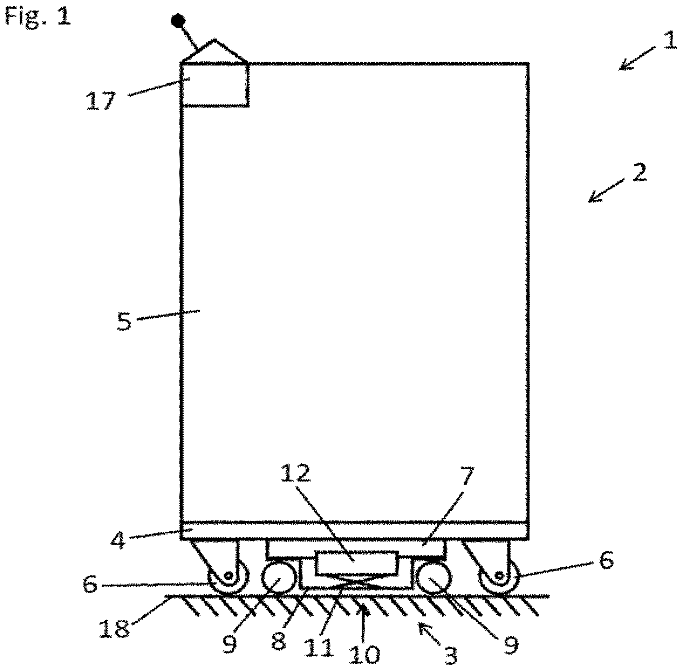

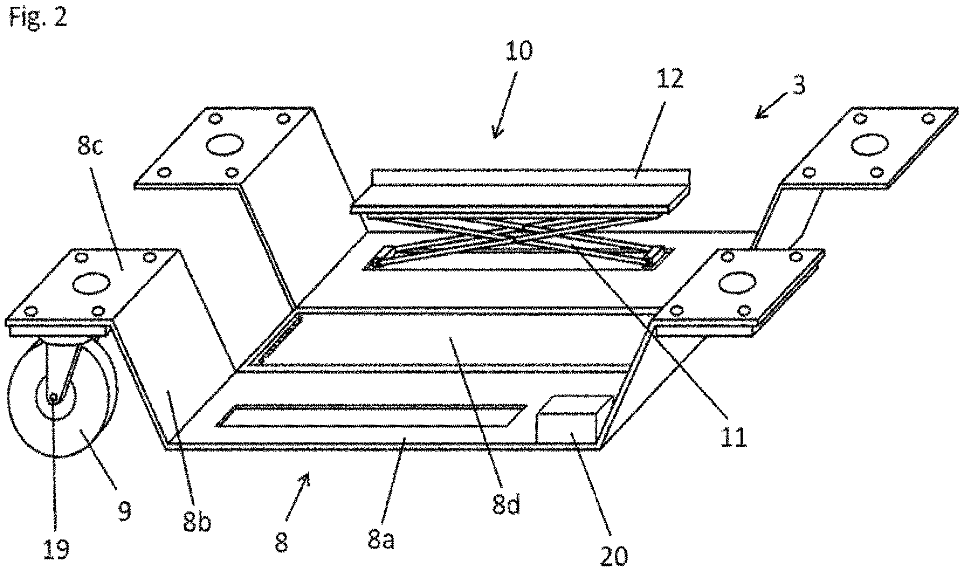

Die in Figur 1 gezeigte Transportwagenkombination 1 für eine Flugzeugkabine weist einen herkömmlichen, von Hand bewegbaren Transportwagen 2 und eine lösbar mit diesem gekoppelte elektrische Betätigungsvorrichtung 3 auf, die auch als Betätigungsmodul bezeichnet werden kann. Der Transportwagen 2 ist zur Verwendung in einer Flugzeugkabine und insbesondere für den Passagierservice vorgesehen und weist in üblicher Weise einen Bodenabschnitt 4 auf, an dessen Unterseite mehrere Räder 6 montiert sind und von dessen gegenüberliegender Oberseite ein Hauptabschnitt 5 ausgeht. Es können zum Beispiel vier Räder 6 vorgesehen sein (siehe Figur 2), von denen in der Figur 1 nur zwei sichtbar sind. Der Transportwagen 2 kann mit den Rädern 6 auf einem Boden 18 der Flugzeugkabine abgestützt werden und dann für sich genommen vom Bordpersonal rollend über den Kabinenboden 18 geschoben oder gezogen werden kann.

Die elektrische Betätigungsvorrichtung 3 ist unter der Unterseite des Bodenabschnitts 4 angeordnet und mit diesem lösbar gekoppelt. Sie weist einen Rahmen 8, mehrere Räder 9, zwei Bewegungseinrichtungen bzw. Bewegungsabschnitte 11 und zwei Angriffsabschnitte 12 auf, wie detaillierter in Figur 2 zu sehen ist (wobei dort der Übersichtlichkeit halber nur eine Bewegungseinrichtung 11 und ein Angriffsabschnitt 12 gezeigt ist). Die Bewegungseinrichtungen 11 und die Angriffsabschnitte 12 sind Teil einer Ankopplungsvorrichtung 10. Wenn nachfolgend von unten und oben die Rede ist oder Ausrichtungen beschrieben werden, wird auf die Orientierung der Transportwagenkombination 1 in Figur 1 Bezug genommen, d.h. auf die Situation, in der die Betätigungsvorrichtung 3 mit ihren Rädern 9 auf dem Kabinenboden 18 abgestützt ist. Der Rahmen 8 weist in dem gezeigten Beispiel einen plattenförmigen und rechteckigen Basisabschnitt 8a auf, von dem sich an vier Ecken jeweils ein Verbindungsabschnitt 8b schräg nach oben erstreckt, der in einen Befestigungsabschnitt 8c übergeht, an dem jeweils eines der Räder 9 in der Weise befestigt ist, dass sich diese nach unten über den Basisabschnitt 8a erstrecken. Die Räder 9, von denen vier vorgesehen sind, in Figur 2 aber nur eines gezeigt ist, stehen damit nach unten über den Rahmen 8 und dessen Basisabschnitt 8a hinaus vor, so dass der Rahmen 8 vom Kabinenboden 18 beabstandet ist, wenn die Räder 9 mit dem Kabinenboden 18 in Kontakt sind. Der Basisabschnitt 8a verläuft dann genauso wie die vier Befestigungsabschnitte 8c parallel zum Kabinenboden 18. Alternativ zu der in Figur 2 gezeigten speziellen Ausgestaltung können die Räder 9 in der dargestellten Ausführungsform auch in vorteilhafter Weise als Allseitenräder oder Mecanum-Räder ausgebildet sein, um einen omnidirektionalen Antrieb bereitzustellen, so dass die Betätigungsvorrichtung 3 ohne eine separate Lenkvorrichtung gelenkt werden kann.

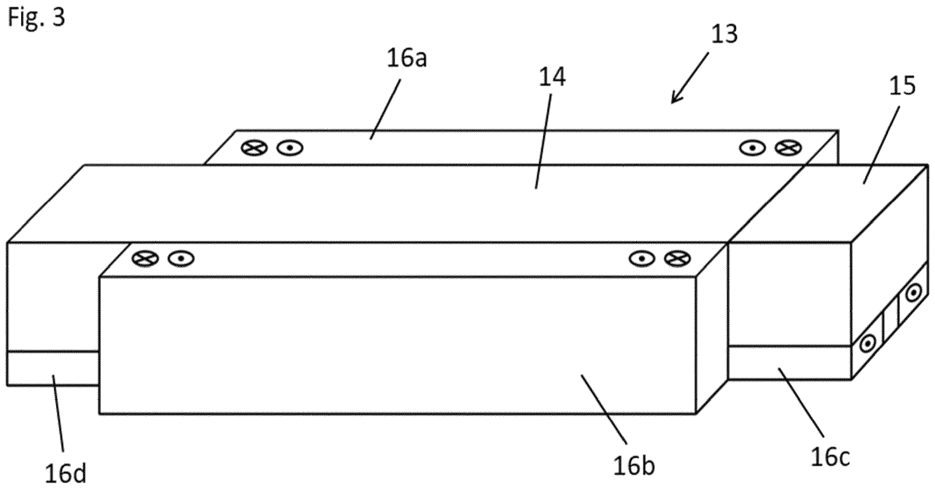

Als Teil des Basisabschnitts 8a ist ein Befestigungsbereich 8d für den in Figur 3 dargestellten kombinierten Batterie-, Sensor- und Steuerblock 13 vorgesehen, der auf dem Befestigungsbereich 8d angeordnet und befestigt werden kann. Der Block 13 weist einen kombinierten Batterie- und Steuerblock 14 auf, der sowohl eine aufladbare Batterie als auch eine Steuereinrichtung enthält. Zum Aufladen der Batterie ist eine Ladeeinrichtung 15 vorgesehen, die zum Beispiel an ein elektrisches Versorgungsnetz angeschlossen werden kann. Die Steuereinrichtung ist mit mehreren Elektromotoren 19, 20 verbunden, die zusammen eine elektrische Antriebseinrichtung bilden, und steuert deren Betrieb. Der Block 13 weist außerdem vier Lasersensoren 16a-16d mit integrierter Sensorelektronik auf, die Eigenschaften der Umgebung der Betätigungsvorrichtung 3 erfassen und entsprechende Sensorsignale an die Steuereinrichtung senden. Insbesondere sind die Lasersensoren 16a-16d dazu angepasst, um den Verlauf eines Gangs in einer Flugzeugkabine zu erkennen, so dass die Steuereinrichtung unter Verwendung der Sensorsignale dazu in der Lage ist, die Elektromotoren 19 anzusteuern und die Transportwagenkombination 1 elektrisch entlang des Ganges zu bewegen. In den Naben der vier Räder 9 ist jeweils ein elektrischer Nabenmotor 19 angeordnet, der mit der Steuereinrichtung verbunden und durch diese gesteuert wird und mit dessen Hilfe das jeweilige Rad 9 elektrisch angetrieben wird.

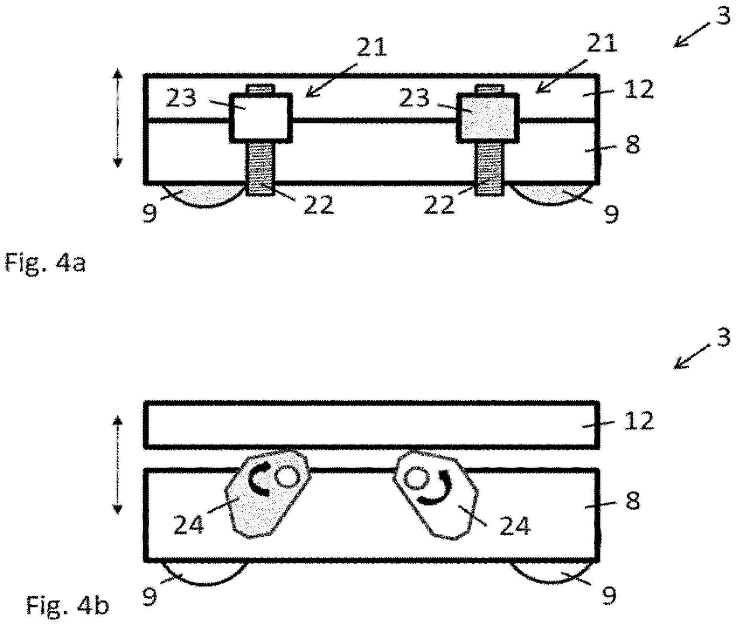

Die beiden Bewegungseinrichtungen 11 und die beiden Angriffsabschnitte 12 bilden zusammen eine mehrteilige Bewegungseinrichtung bzw. einen mehrteiligen Angriffsabschnitt. Die beiden Bewegungseinrichtungen 11 sind jeweils als Scherenhebemechanismus ausgestaltet und auf gegenüberliegenden Seiten des Befestigungsbereichs 8d auf dem Basisabschnitt 8a des Rahmens 8 befestigt. Gegenüber von dem Basisabschnitt 8a ist an ihnen jeweils einer der beiden Angriffsabschnitt 12 befestigt, die als L-Profile ausgebildet sind. Die beiden Bewegungseinrichtungen 11 sind mit einem Elektromotor 20 gekoppelt, der mit der Steuereinrichtung 14 verbunden ist und durch diese gesteuert wird. Mit Hilfe des Elektromotors 20 sind die Bewegungseinrichtungen 11 so bewegbar, dass die beiden Angriffsabschnitte 12 wahlweise in senkrechter Richtung zwischen einer ersten, in Figur 2 gezeigten Position und einer zweiten Position verfahrbar sind. In der zweiten Position sind die Angriffsabschnitt 12 weiter von dem Basisabschnitt 8a beabstandet als in der ersten Position. Die Bewegungseinrichtungen 11 können aber auch anders ausgebildet sein und zum Beispiel ein oder mehrere Spindelhubelemente, einen oder mehrere Hydraulikzylinder, einen oder mehrere teleskopische Zylinder, einen oder mehrere Spiralhubzylinder oder ein oder mehrere drehbar gelagerte und antreibbare Nocken- bzw. Kurvenscheiben aufweisen. Figur 4a zeigt eine Variante, in der die Bewegungseinrichtung 11 statt des Scherenhebemechanismus mehrere Spindelhubelemente 21 aufweist. Jedes der Spindelhubelemente 21 weist eine Spindel 22 auf, die jeweils mit einem der Angriffsabschnitte 12 verbunden sind und mit Hilfe eines durch die elektrische Antriebseinrichtung angetriebenen Getriebes 23 wahlweise axial noch oben und nach unten bewegt werden kann. Figur 4b zeigt eine weitere Variante, in der die Bewegungseinrichtung 11 mehrere Kurvenscheiben 24 aufweist. Jede der Kurvenscheiben 24 ist drehbar an dem Rahmen 8 montiert und liegt an jeweils einem der Angriffsabschnitte 12 an. Sie sind so geformt, dass durch Drehung der Kurvenscheiben 24 mit Hilfe der elektrischen Antriebseinrichtung die Angriffsabschnitte 12 wahlweise noch oben und nach unten bewegt werden.

Auf diese Weise kann die Betätigungsvorrichtung 3 mit den Angriffsabschnitten 12 in der ersten Position der Figur 2 in die Position unter dem Transportwagen 2 angeordnet werden, wie es in Figur 1 gezeigt ist. Anschließend wird der Elektromotor 20 von der Steuereinrichtung 14 so angesteuert, dass die Angriffsabschnitte 12 nach oben in die zweite Position bewegt werden, in der sie an gegenüberliegenden Längskanten des Bodenabschnitts 4 angreifen. Durch das Vorsehen von zwei beabstandeten Bewegungseinrichtungen 11 und Angriffsabschnitten 12 kann der Bodenabschnitt 4 zum Beispiel einen nach unten gerichteten Vorsprung 7 in seiner Mitte aufweisen. Die zweite Position wird von der Steuereinrichtung 14 so gewählt, dass eine senkrecht nach oben gerichtete Kraft auf den Bodenabschnitt 4 ausgeübt wird und auf diese Weise die Räder 6 des Transportwagens 2 von einem Teil des Gewichtes des Transportwagens 2 entlastet werden. Dadurch lastet der Transportwagen 2 mit einem Teil seines Gewichts auf den Rädern 9 der Betätigungsvorrichtung 3, so dass die gesamte Transportwagenkombination 1 mit Hilfe der Räder 9 bewegt werden kann. Dazu werden die Nabenmotoren 19 von der Steuereinrichtung 14 in geeigneter Weise angesteuert.

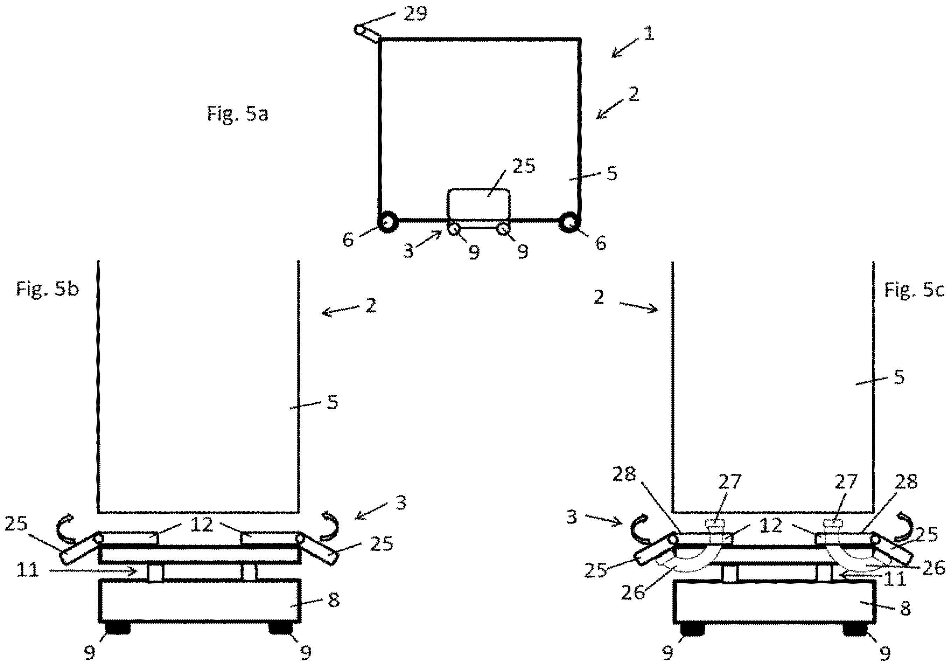

Die beiden Angriffsabschnitte 12, die als L-Profile ausgebildet sind, können eine Verriegelungseinrichtung aufweisen, mit der der Transportwagen 2 wahlweise an den Angriffsabschnitten 12 festgeklemmt und von diesen gelöst werden kann. Wie allgemein in Figur 5a gezeigt ist, die schematisch und vereinfacht eine Seitenansicht einer Transportwagenkombination 1 wie der der Figur 1 zeigt, weisen die L-Profile 12 jeweils eine seitliche Platte 25 auf, zwischen denen das untere Ende des Hauptabschnitts 5 des Transportwagens 2 angeordnet ist. Diese Platten 25 sind schwenkbar montiert, so dass sie zwischen der in Figur 5a gezeigten Verriegelungsstellung, in der sie den Hauptabschnitt 5 zwischen sich festklemmen, und der in den Figuren 5b und 5c gezeigten Freigabestellung verschwenkt werden können, in der sie den Transportwagen 2 freigeben. Figur 5b zeigt dabei eine Variante, in der die Platten 25 manuell verschwenkt werden, wobei zum Festhalten in der Verriegelungsstellung nicht gezeigte, manuell zu betätigende Feststellhebel vorgesehen sein können. Figur 5c zeigt eine andere Variante, in der die Platten 25 durch den Kontakt zwischen den Angriffsabschnitten 12 und dem Transportwagen 2 aus der Freigabestellung verschwenkt werden. Dazu sind an jedem der Angriffsabschnitte 12 ein oder mehrere Nockenelemente 26 vorgesehen, die an einem Ende an der jeweiligen Platte 25 befestigt sind und deren gegenüberliegendes Ende 27 in der Freigabestellung von einer durch den jeweiligen Angriffsabschnitt 12 bereitgestellten Auflagefläche 28 vorsteht. Durch das Auflegen des Transportwagens 2 auf die Auflageflächen 28 werden diese Enden 27 nach unten gedrückt, wodurch eine Schwenkbewegung in die Verriegelungsstellung auf die Platten 25 übertragen wird. Figur 5a ist auch zu entnehmen, dass die Transportwagen 2 im Allgemeinen einen Handgriff 29 zum Schieben, Ziehen und Lenken des Transportwagens 2 bzw. der Transportwagenkombination 1 aufweisen.

Zur Bedienung des oben erläuterten Betriebs der Betätigungsvorrichtung 3 ist eine Fernsteuerung 17 vorgesehen, die mit der Steuereinrichtung 14 z.B. drahtlos verbunden ist und beispielsweise einen Joystick aufweisen und/oder vorübergehend an dem Transportwagen 2 befestigt werden kann. Die Fernsteuerung 17 kann zum Beispiel dazu angepasst sein, wahlweise ein Start- oder Stopsignal an die Steuereinrichtung 14 zu senden, die dann die Nabenmotoren 19 entweder in Betrieb setzt oder ausschaltet, wobei die Nabenmotoren 19 im ausgeschalteten Zustand die Räder 9 blockieren. Die Steuereinrichtung 14 berücksichtigt auch die Sensorsignale der Sensoren 16a-16d, um die Transportwagenkombination 1 selbständig entlang eines Kabinengangs zu bewegen.

## Patentansprüche

1. Elektrisch angetriebene Transportwagenkombination für eine Flugzeugkabine, wobei die Transportwagenkombination (1) aufweist:
- einen unabhängig verwendbaren manuell zu bewegenden Transportwagen (2) für eine Flugzeugkabine, der
- einen Bodenabschnitt (4) mit einer Unterseite,
- einen Hauptabschnitt (5), der sich gegenüber von der Unterseite von dem Bodenabschnitt (4) erstreckt, und
- eine Vielzahl von Rädern (6) aufweist, die zumindest teilweise von der Unterseite vorstehen und so angeordnet sind, dass der Transportwagen (2) mit den Rädern (6) auf einem Kabinenboden (18) abgestützt und manuell durch Schieben oder Ziehen über den Kabinenboden (18) bewegt werden kann, und
- eine elektrische Betätigungsvorrichtung (3), die lösbar mit dem Transportwagen (2) koppelbar ist und die
- einen Rahmen (8),
- eine an dem Rahmen (8) montierte antreibbare Rolleinrichtung (9), mittels derer die elektrische Betätigungsvorrichtung (3) auf einem Kabinenboden (18) abstützbar und rollend über den Kabinenboden (18) bewegbar ist,
- eine an dem Rahmen (8) montierte Ankopplungsvorrichtung (10), die zur lösbaren Kopplung der elektrischen Betätigungsvorrichtung (3) mit dem Transportwagen (2) angepasst ist und einen Angriffsabschnitt (12) und einen Bewegungsabschnitt (11) aufweist, wobei der Angriffsabschnitt (12) mittels des Bewegungsabschnitts (11) wahlweise zwischen einer ersten Position und einer zweiten Position bewegt werden kann, in der der Angriffsabschnitt (12) weiter von dem Rahmen (8) entfernt ist als in der ersten Position,
- eine elektrische Antriebseinrichtung (19, 20), die angepasst ist, um die Rolleinrichtung (9) anzutreiben und zu bremsen, und
- eine Steuereinrichtung (14), **dadurch gekennzeichnet, dass** die Steuereinrichtung angepasst ist, um die elektrische Antriebseinrichtung (19, 20) so zu steuern, dass diese automatisch eine Bewegung der Transportwagenkombination (1) beim Schieben unterstützt und ohne Schieben die Rolleinrichtung (9) bremst.

2. Elektrisch angetriebene Transportwagenkombination nach Anspruch 1, bei der die Ankopplungsvorrichtung (10) so angeordnet und ausgestaltet ist, dass nach Abstützung des Transportwagens (2) mit den Rädern (6) auf einem Kabinenboden (18) die elektrische Betätigungsvorrichtung (3) mit dem Angriffsabschnitt (12) in der ersten Position so unter dem Bodenabschnitt (4) des Transportwagens (2) angeordnet wer-den kann, dass sie mit der Rolleinrichtung (9) auf dem Kabinenboden (18) abgestützt ist und der Angriffsabschnitt (12) der Unterseite des Bodenabschnitts (4) des Transportwagens (2) zugewandt ist, und der Angriffsabschnitt (12) anschließend durch Bewegung in die zweite Position mit dem Bodenabschnitt (4) in Eingriff gebracht wird, wobei die Ankopplungsvorrichtung (10) in der zweiten Position des Angriffsabschnitts (12) eine von dem Kabinenboden (18) weg gerichtete Kraft auf den Bodenabschnitt (4) ausübt, die die Vielzahl von Rädern (6) des Transportwagens (2) zumindest teilweise von dessen Gewicht entlastet.

3. Elektrisch angetriebene Transportwagenkombination nach Anspruch 1 oder Anspruch 2, die ferner eine elektrische Energieversorgungseinrichtung (14) zur Versorgung der elektrischen Antriebseinrichtung (19, 20) mit elektrischer Energie aufweist.

4. Elektrisch angetriebene Transportwagenkombination nach einem der vorhergehenden Ansprüche, bei der die elektrische Antriebseinrichtung (19, 20) ferner angepasst ist, um den Bewegungsabschnitt (11) elektrisch anzutreiben.

5. Elektrisch angetriebene Transportwagenkombination nach einem der vorhergehenden Ansprüche, bei der der Bewegungsabschnitt (11) der Ankopplungsvorrichtung (10) mindestens einen Scherenhebemechanismus (11), mindestens ein Spindelhubelement, mindestens einen Hydraulikzylinder, mindestens einen teleskopischen Zylinder, mindestens einen Spiralhubzylinder oder mindestens eine drehbar gelagerte und antreibbare Nocken- bzw. Kurvenscheibe aufweist.

6. Elektrisch angetriebene Transportwagenkombination nach einem der vorhergehenden Ansprüche, bei der der Angriffsabschnitt (12) zwei voneinander beabstandete L-Profile aufweist, die angepasst sind, um in der zweiten Position des Angriffsabschnitts (12) an zwei gegenüberliegenden Kanten des Bodenabschnitts (4) anzugreifen.

7. Elektrisch angetriebene Transportwagenkombination nach einem der vorhergehenden Ansprüche, bei der die Rolleinrichtung (9) mehrere Räder (9) aufweist, von denen mindestens ein Rad (9) durch die elektrische Antriebseinrichtung (19, 20) antreibbar ist.

8. Elektrisch angetriebene Transportwagenkombination nach einem der vorhergehenden Ansprüche, bei der die Rolleinrichtung (9) eine Vielzahl von Kugeln oder Rollen aufweist, von denen mindestens eine durch die elektrische Antriebseinrichtung (19, 20) antreibbar ist.

9. Elektrisch angetriebene Transportwagenkombination nach einem der vorhergehenden Ansprüche, bei der die Steuereinrichtung (14) eine Bedienungseinrichtung (17) aufweist oder mit einer Bedienungseinrichtung (17) kabelgebunden oder kabellos verbunden ist.

10. Elektrisch angetriebene Transportwagenkombination nach einem der vorhergehenden Ansprüche, bei der die Betätigungseinrichtung (3) eine mit der Steuereinrichtung (14) verbundene und durch diese angesteuerte Statusanzeige (17) zum Anzeigen von Betriebszuständen der Betätigungseinrichtung (3) aufweist.

11. Elektrisch angetriebene Transportwagenkombination nach einem der vorhergehenden Ansprüche, bei der die elektrische Betätigungsvorrichtung (3) ferner eine Sensoranordnung (16a-16d) aufweist, die mit der Steuereinrichtung (14) verbunden und angepasst ist, um Eigenschaften der Umgebung der Betätigungsvorrichtung (3) zu erfassen, wobei die Steuereinrichtung (14) ferner angepasst ist, um auf Basis von Sensorsignalen der Sensoranordnung (16a-16d) die Transportwagenkombination (1) selbständig entlang eines Gangs einer Flugzeugkabine zu bewegen.

12. Verwendung einer elektrischen Betätigungsvorrichtung (3) mit einem unabhängig verwendbaren manuell zu bewegenden Transportwagen (2) für eine Flugzeugkabine in einer Transportwagenkombination (1) nach einem der vorhergehenden Ansprüche, wobei die elektrische Betätigungsvorrichtung (3)
- einen Rahmen (8),
- eine an dem Rahmen (8) montiert antreibbare Rolleinrichtung (9), mittels derer die elektrische Betätigungsvorrichtung (3) auf einem Kabinenboden (18) abstützbar und rollend über den Kabinenboden (18) bewegbar ist,
- eine an dem Rahmen (8) montierte Ankopplungsvorrichtung (10), die zur lösbaren Kopplung der elektrischen Betätigungsvorrichtung (3) mit einem unabhängig verwendbaren manuell zu bewegenden Transport-wagen (2) für eine Flugzeugkabine angepasst ist und einen Angriffsabschnitt (12) und einen Bewegungsabschnitt (11) aufweist, wobei der Angriffsabschnitt (12) mittels des Bewegungsabschnitts (11) wahlweise zwischen einer ersten Position und einer zweiten Position bewegt wer-den kann, in der der Angriffsabschnitt (12) weiter von dem Rahmen (8) entfernt ist als in der ersten Position,
- eine elektrische Antriebseinrichtung (19, 20), die angepasst ist, um die Rolleinrichtung (9) anzutreiben und zu bremsen, und
- eine Steuereinrichtung (14) aufweist, die angepasst ist, um die elektrische Antriebseinrichtung (19, 20) so zu steuern, dass diese automatisch eine Bewegung der Transportwagenkombination (1) beim Schieben unterstützt und ohne Schieben die Rolleinrichtung (9) bremst,
und der Transportwagen (2)
- einen Bodenabschnitt (4) mit einer Unterseite,
- einen Hauptabschnitt (5), der sich gegenüber von der Unterseite von dem Bodenabschnitt (4) erstreckt, und
- eine Vielzahl von Rädern (6) aufweist, die zumindest teilweise von der Unterseite vorstehen und so angeordnet sind, dass der Transportwagen (2) mit den Rädern (6) auf einem Kabinenboden (18) abgestützt und manuell durch Schieben oder Ziehen über den Kabinenboden (18) bewegt werden kann.

13. Verwendung nach Anspruch 12, bei der die Ankopplungsvorrichtung (10) so angeordnet und ausgestaltet ist, dass nach Abstützung des Transportwagens (2) mit den Rädern (6) auf einem Kabinenboden (18) die elektrische Betätigungsvorrichtung (3) mit dem Angriffsabschnitt (12) in der ersten Position so unter dem Bodenabschnitt (4) des Transportwagens (2) angeordnet werden kann, dass sie mit der Rolleinrichtung (9) auf dem Kabinenboden (18) abgestützt ist und der Angriffsabschnitt (12) der Unterseite des Bodenabschnitts (4) des Transportwagens (2) zugewandt ist, und der Angriffsabschnitt (12) anschließend durch Bewegung in die zweite Position mit dem Bodenabschnitt (4) in Eingriff gebracht wird, wobei die Ankopplungsvorrichtung (10) in der zweiten Position des Angriffsabschnitts (12) eine von dem Kabinen-boden (18) weg gerichtete Kraft auf den Bodenabschnitt (4) ausübt, die die Vielzahl von Rädern (6) des Transportwagens (2) zumindest teilweise von dessen Gewicht entlastet.

## Claims

1. Electrically driven trolley combination for an aircraft cabin, wherein the trolley combination (1) has:
- an independently usable, manually movable trolley (2) for an aircraft cabin, which trolley has
- a base section (4) with a bottom side,
- a main section (5) which extends from the base section (4) opposite to the bottom side, and
- a multiplicity of wheels (6) which at least partially protrude from the bottom side and are arranged such that the trolley (2) is supported on a cabin floor (18) by way of the wheels (6) and can be manually moved over the cabin floor (18) by being pushed or pulled, and
- an electrical operating apparatus (3) which can be detachably coupled to the trolley (2) and which has
- a frame (8),
- a driveable rolling device (9) which is mounted on the frame (8) and by means of which the electrical operating apparatus (3) can be supported on a cabin floor (18) and can be moved over the cabin floor (18) in a rolling manner,
- a coupling apparatus (10) which is mounted on the frame (8) and is adapted for detachably coupling the electrical operating apparatus (3) to the trolley (2) and has an action section (12) and a movement section (11), wherein the action section (12) can be selectively moved between a first position and a second position by means of the movement section (11), the action section (12) being further away from the frame (8) in the said second position than in the first position,
- an electrical drive device (19, 20) which is adapted in order to drive and brake the rolling device (9), and
- a control device (14)
**characterized in that**
the control device is adapted in order to control the electrical drive device (19, 20) so that the latter automatically facilitates a movement of the trolley combination (1) when pushed and brakes the rolling device (9) when not pushed.

2. Electrically driven trolley combination according to Claim 1, in which the coupling apparatus (10) is arranged and designed such that, after the trolley (2) is supported on a cabin floor (18) by way of the wheels (6), the electrical operating apparatus (3) with the action section (12) in the first position can be arranged beneath the base section (4) of the trolley (2) such that the said electrical operating apparatus is supported on the cabin floor (18) by way of the rolling device (9), and the action section (12) faces the bottom side of the base section (4) of the trolley (2), and the action section (12) then engages with the base section (4) by moving to the second position, wherein the coupling apparatus (10) exerts a force, which is directed away from the cabin floor (18), onto the base section (4) in the second position of the action section (12), the said force at least partially relieving the weight load of the trolley from the multiplicity of wheels (6) of the trolley (2) .

3. Electrically driven trolley combination according to Claim 1 or Claim 2, which further has an electrical power supply device (14) for supplying electrical power to the electrical drive device (19, 20) .

4. Electrically driven trolley combination according to one of the preceding claims, in which the electrical drive device (19, 20) is further adapted in order to electrically drive the movement section (11) .

5. Electrically driven trolley combination according to one of the preceding claims, in which the movement section (11) of the coupling apparatus (10) has at least one scissors lifting mechanism (11), at least one spindle lifting element, at least one hydraulic cylinder, at least one telescopic cylinder, at least helical lifting cylinder, or at least one rotatably mounted and drivable cam disc or rotary cam.

6. Electrically driven trolley combination according to one of the preceding claims, in which the action section (12) has two L profiles which are at a distance from one another and which are adapted in order to act on two opposite edges of the base section (4) in the second position of the action section (12).

7. Electrically driven trolley combination according to one of the preceding claims, in which the rolling device (9) has a plurality of wheels (9), at least one wheel (9) of which can be driven by the electrical drive device (19, 20).

8. Electrically driven trolley combination according to one of the preceding claims, in which the rolling device (9) has a multiplicity of balls or rollers, at least one of which can be driven by the electrical drive device (19, 20).

9. Electrically driven trolley combination according to one of the preceding claims, in which the control device (14) has an operator control device (17) or is connected to an operator control device (17) using cables or without cables.

10. Electrically driven trolley combination according to one of the preceding claims, in which the operating device (3) has a status display (17), which is connected to the control device (14) and can be actuated by the said control device, for displaying operating states of the operating device (3) .

11. Electrically driven trolley combination according to one of the preceding claims, in which the electrical operating apparatus (3) further has a sensor arrangement (16a-16d) which is connected to the control device (14) and is adapted in order to detect properties of the area surrounding the operating apparatus (3), wherein the control device (14) is further adapted in order to move the trolley combination (1) independently along an aisle of an aircraft cabin on the basis of sensor signals from the sensor arrangement (16a-16d).

12. Use of an electrical operating apparatus (3) having an independently usable, manually movable trolley (2) for an aircraft cabin in a trolley combination (1) according to one of the preceding claims, wherein the electrical operating apparatus (3) has
- a frame (8),
- a driveable rolling device (9) which is mounted on the frame (8) and by means of which the electrical operating apparatus (3) can be supported on a cabin floor (18) and can be moved over the cabin floor (18) in a rolling manner,
- a coupling apparatus (10) which is mounted on the frame (8) and is adapted for detachably coupling the electrical operating apparatus (3) to an independently usable, manually movable trolley (2) for an aircraft cabin and has an action section (12) and a movement section (11), wherein the action section (12) can be selectively moved between a first position and a second position by means of the movement section (11), the action section (12) being further away from the frame (8) in the said second position than in the first position,
- an electrical drive device (19, 20) which is adapted in order to drive and brake the rolling device (9), and
- a control device (14) which is adapted in order to control the electrical drive device (19, 20) so that the latter automatically facilitates a movement of the trolley combination (1) when pushed and brakes the rolling device (9) when not pushed,
and the trolley (2) has
- a base section (4) with a bottom side,
- a main section (5) which extends from the base section (4) opposite to the bottom side, and
- a multiplicity of wheels (6) which at least partially protrude from the bottom side and are arranged such that the trolley (2) is supported on a cabin floor (18) by way of the wheels (6) and can be manually moved over the cabin floor (18) by being pushed or pulled.

13. Use according to Claim 12, in which the coupling apparatus (10) is arranged and designed such that, after the trolley (2) is supported on a cabin floor (18) by way of the wheels (6), the electrical operating apparatus (3) with the action section (12) in the first position can be arranged beneath the base section (4) of the trolley (2) such that the said electrical operating apparatus is supported on the cabin floor (18) by way of the rolling device (9), and the action section (12) faces the bottom side of the base section (4) of the trolley (2), and the action section (12) then engages with the base section (4) by moving to the second position, wherein the coupling apparatus (10) exerts a force, which is directed away from the cabin floor (18), onto the base section (4) in the second position of the action section (12), the said force at least partially relieving the weight load of the trolley from the multiplicity of wheels (6) of the trolley (2) .

## Revendications

1. Combinaison de chariot de transport à entraînement électrique destinée à une cabine d'avion, la combinaison de chariot de transport (1) comportant :
- un chariot de transport (2), destiné à une cabine d'avion, qui peut être utilisé indépendamment, qui est déplaçable manuellement et qui comporte
- une portion de fond (4) pourvue d'un côté inférieur,
- une portion principale (5) qui s'étend depuis la partie inférieure (4) à l'opposé de la face inférieure, et
- un grand nombre de roues (6) qui font saillie au moins partiellement du côté inférieur et qui sont disposées de telle sorte que le chariot de transport (2) vient en appui avec les roues (6) sur un plancher de cabine (18) et qui peut être déplacé par poussée ou traction manuelle sur le plancher de cabine (18), et
- un dispositif d'actionnement électrique (3) qui peut être accouplé de manière amovible au chariot de transport (2) et qui comporte
- un cadre (8),
- une unité de roulement entraînable (9) qui est montée sur le cadre (8) et qui permet de mettre le dispositif d'actionnement électrique (3) en appui sur un plancher de cabine (18) et le déplacer par roulement sur le plancher de cabine (18),
- un dispositif d'accouplement (10) qui est monté sur le cadre (8), qui est conçue pour accoupler de manière amovible le dispositif d'actionnement électrique (3) au chariot de transport (2) et qui comporte une portion d'engagement (12) et une portion de déplacement (11), la portion d'engagement (12) pouvant être sélectivement déplacée au moyen de la portion de déplacement (11) entre une première position et une deuxième position dans laquelle la portion d'engagement (12) est plus éloignée du cadre (8) que dans la première position,
- une unité d'entraînement électrique (19, 20) qui est conçue pour entraîner et freiner l'unité de roulement (9), et
- une unité de commande (14),
**caractérisée en ce que** l'unité de commande est conçue pour commander l'unité d'entraînement électrique (19, 20) de façon à favoriser automatiquement le déplacement de la combinaison de chariot de transport (1) lorsqu'elle est poussée et à freiner l'unité de roulement (9) lorsqu'elle n'est pas poussée.

2. Combinaison de chariot de transport à entraînement électrique selon la revendication 1, dans laquelle le dispositif d'accouplement (10) est disposé et conçu de telle sorte que, après que le chariot de transport (2) a été mis en appui sur un plancher de cabine (18) avec les roues (6), le dispositif d'actionnement électrique (3) puisse être disposé avec la portion d'engagement (12) dans la première position au-dessous de la portion de plancher (4) du chariot de transport (2) de façon à être en appui avec l'unité de roulement (9) sur le plancher de cabine (18) et de telle sorte que la portion d'engagement (12) soit dirigée vers le côté inférieur de la portion de plancher (4) du chariot de transport (2), et que la portion d'engagement (12) soit ensuite amenée en engagement avec la portion de plancher (4) par déplacement jusque dans la deuxième position, le dispositif d'accouplement (10) dans la deuxième position de la portion d'engagement (12) exerçant sur la portion de plancher (4) une force qui est dirigée à l'opposé du plancher de cabine (18) et qui soulage au moins partiellement le grand nombre de roues (6) du chariot de transport (2) du poids de celui-ci.

3. Combinaison de chariot à entraînement électrique selon la revendication 1 ou la revendication 2, qui comporte en outre une unité d'alimentation en énergie électrique (14) destiné à alimenter l'unité d'entraînement électrique (19, 20) en énergie électrique.

4. Combinaison de chariot à entraînement électrique selon l'une des revendications précédentes, dans laquelle l'unité d'entraînement électrique (19, 20) est en outre conçue pour entraîner électriquement la portion de déplacement (11).

5. Combinaison de chariot de transport à entraînement électrique selon l'une des revendications précédentes, dans laquelle la portion de déplacement (11) du dispositif d'accouplement (10) comporte au moins un mécanisme de levage à ciseaux (11), au moins un élément de levage à broche, au moins un vérin hydraulique, au moins un vérin télescopique, au moins un vérin de levage en spirale ou au moins une came ou un disque à came monté et entraînable en rotation.

6. Combinaison de chariot électrique selon l'une des revendications précédentes, dans laquelle la portion d'engagement (12) comporte deux profilés en L distants l'un de l'autre et conçus pour s'engager, dans la deuxième position de la portion d'engagement (12), avec deux bords opposés de la portion de plancher (4).

7. Combinaison de chariot à entraînement électrique selon l'une des revendications précédentes, dans laquelle l'unité de roulement (9) comporte une pluralité de roues (9) dont au moins une roue (9) peut être entraînée par l'unité d'entraînement électrique (19, 20).

8. Combinaison de chariot de transport à entraînement électrique selon l'une des revendications précédentes, dans laquelle l'unité de roulement (9) comporte un grand nombre de billes ou de galets dont au moins un peut être entraîné par l'unité d'entraînement électrique (19, 20).

9. Combinaison de chariot à entraînement électrique selon l'une des revendications précédentes, dans laquelle l'unité de commande (14) comporte une unité de service (17) ou est reliée à une unité de service (17) par câble ou sans fil.

10. Combinaison de chariot à entraînement électrique selon l'une des revendications précédentes, dans laquelle l'unité d'actionnement (3) comporte un affichage d'état (17) qui est relié l'unité de commande (14) et commandé par celle-ci et qui est destinée à afficher des états de fonctionnement de l'unité d'actionnement (3).

11. Combinaison de chariot électrique selon l'une des revendications précédentes, dans laquelle le dispositif d'actionnement électrique (3) comporte en outre un ensemble de capteurs (16a-16d) qui est relié à l'unité de commande (14) et qui est conçu pour détecter les propriétés de l'environnement du dispositif d'actionnement (3), l'unité de commande (14) étant en outre conçue pour déplacer la combinaison de chariot de transport (1) indépendamment le long d'un couloir d'une cabine d'avion sur la base de signaux de capteur provenant de l'ensemble de capteurs (16a-16d).

12. Utilisation d'un dispositif d'actionnement électrique (3) comprenant un chariot de transport (2), destiné à une cabine d'avion, qui peut être utilisé indépendamment et qui est déplaçable manuellement, dans une combinaison de chariot de transport (1) selon l'une des revendications précédentes, le dispositif d'actionnement électrique (3) comportant
- un cadre (8),
- une unité de roulement entraînable (9) montée sur le cadre (8) et permettant de mettre le dispositif d'actionnement électrique (3) en appui sur un plancher de cabine (18) et de le déplacer par roulement sur le plancher de cabine (18),
- un dispositif d'accouplement (10) monté sur le cadre (8) et conçu pour accoupler de manière amovible le dispositif d'actionnement électrique (3) à un chariot de transport (2), destiné à une cabine d'avion, qui peut être utilisé indépendamment et déplacé manuellement, et une portion d'engagement (12) et une portion de déplacement (11), la portion d'engagement (12) pouvant être déplacée sélectivement au moyen de la portion de déplacement (11) entre une première position et une deuxième position dans laquelle la portion d'engagement (12) est plus éloignée du cadre (8) que dans la première position,
- une unité d'entraînement électrique (19, 20) conçue pour entraîner et freiner l'unité de roulement (9), et
- une unité de commande (14) qui est conçue pour commander l'unité d'entraînement électrique (19, 20) de façon à favoriser automatiquement un mouvement de la combinaison de chariot de transport (1) lorsqu'elle est poussée et à freiner l'unité de roulement (9) lorsqu'elle n'est pas poussée,
et le chariot de transport (2) comportant
- une portion de plancher (4) pourvue d'un côté inférieur,
- une portion principale (5) qui s'étend à l'opposé du côté inférieur de la portion de plancher (4), et
- un grand nombre de roues (6) qui font saillie au moins partiellement du côté inférieur et qui sont disposées de telle sorte que le chariot de transport (2) soit mis en appui avec les roues (6) sur un plancher de cabine (18) et déplacé manuellement par poussée ou traction sur le plancher de cabine (18).

13. Utilisation selon la revendication 12, dans laquelle le dispositif d'accouplement (10) est disposé et conçu de telle sorte que, après que le chariot de transport (2) a été mis en appui sur un plancher de cabine (18) avec les roues (6), le dispositif d'actionnement électrique (3) puisse être disposé avec la portion d'engagement (12) dans la première position au-dessous de la portion de plancher (4) du chariot de transport (2) de façon à être en appui avec l'unité de roulement (9) sur le plancher de cabine (18) et de telle sorte que la portion d'engagement (12) soit dirigée vers le côté inférieur de la portion de plancher (4) du chariot de transport (2), et que la portion d'engagement (12) soit ensuite amenée en engagement avec la portion de plancher (4) par déplacement jusque dans la deuxième position, le dispositif d'accouplement (10) dans la deuxième position de la portion d'engagement (12) exerçant sur la portion de plancher (4) une force qui est dirigée à l'opposé du plancher de cabine (18) et qui soulage au moins partiellement le grand nombre de roues (6) du chariot de transport (2) du poids de celui-ci.
